# EUROPEAN PATENT APPLICATION

(11) **EP 0 685 663 A1**
(43) Date of publication of application: **06.12.1995**
(21) Application number: 95303728.0
(22) Date of filing: 31.05.1995
(51) Int. Cl.: F16H 57/02, F16D 1/076

(54) **Torque transmitting device for a drive system**

(30) Priority: 31.05.1994 US 250879
(71) Applicant: XEROX CORPORATION, Rochester New York 14644 (US)
(72) Inventor: Coleman, Raymond C., Webster NY 14580 (US)
(74) Representative: Goode, Ian Roy

(57) **Abstract**

A torque transmitting device to enable the location of motion effecting members (20), such as gears, pulleys, lever arms, etc. anywhere along the longitudinal length of a drive shaft (10) of a drive system. The torque transmitting device may be utilized to locate motion effecting members on other type shafts, such as, e.g., idler shafts and diverter gate shafts for partial rotation or oscillating rotation of less than 360 degrees. The torque transmitting device has a member (30) with a slot (36) and fixed stubs (32) to provide a positive coupling between the shaft and the motion effecting member without the need for a non-round bore in the motion effecting member. The slot in the torque transmitting member is sized to couple to a double "D" slot on the shaft and to also engage the stubs in openings (22,24) in the motion effecting member. A lock ring (40) can be utilized to retain the motion effecting member (20) in its desired position adjacent the torque transmitting member (30).

## Description

This invention relates generally to a drive system, and more particularly concerns the use of a torque transmitting device to drivingly interconnect a motion effecting or driven member with a rotating shaft.

Generally, motion effecting members or driven members or components such as pulleys, gears, diverter arms, etc., are attached to rotating or oscillating shafts by way of a flat portion formed on the shaft which cooperates with a non-round opening in the motion effecting member, or by use of a keyway or set screw to attach the motion effecting member to the shaft to prevent relative rotation thereof. Typically, motion effecting members having non-round bores for placement on the shaft can only be utilized on the ends of the shaft, as there is no way to pass the non-round portion down a round shaft to locate the motion effecting member in the middle double "D" thereof. Thus, the non-round bores are not suitable for situations in which a motion effecting member such as a gear or lever arm must be mounted in the center portion of the shaft. This member is located by use of a snap ring or the like in a groove circumferentially around the shaft to provide a stop for the member. The member can then be secured against relative rotation with the shaft by way of a keyway in which a key or small plug is inserted to lock the shaft to the rotatable member, or by use of a set screw in which a threaded hole is formed in the motion effecting member in a direction radial to the shaft and a set screw is inserted therein to lock the member to the shaft.

In many applications for motion effecting members, it is desirable to use lightweight, relatively low strength plastic components such as pulleys, gears, and the like. The problem with these members is that either the non-round portion which can be formed in the bore of the member for insertion onto the end portion of a shaft or the keyway portion or set screw bore is limited in the amount of torque which can be transmitted to the component. When too much torque is applied, the keyway or non-round section or set screw bore is damaged and torn loose, thereby allowing the member to rotate relative to the shaft.

It is an object of the present invention to provide a mounting method for attaching motion effecting members to a rotating shaft that would allow universal mounting anywhere along a shaft and also provide relatively high torque transmission without damaging the lightweight motion effecting members.

US-A-5,213,001 discloses a thermoplastic power transmission element having increased torque capacity. The power transmission element includes a central hub arranged to surround and engage a keyed driven shaft. A metallic insert within the central hub engages the key to receive the driving forces transmitted therethrough. The metallic insert includes a plurality of mating surfaces engaging the central hub to distribute the driving forces over a larger area than the area of the keyway.

US-A-4,603,597 discloses a drive system in which a driven member is mounted on a shaft member to rotate in unison therewith. The driven member has a protrusion extending outwardly from one surface thereof to engage a retaining ring having an open end mounted on the shaft member. The open end of the retaining ring meshes with the protrusion so as to rotate in unison with the germane member.

In accordance with one aspect of the present invention, there is provided a torque transmitting device for a drive system, comprising: a drive shaft; a motion effecting member slidably mounted on said shaft; a torque transmitting member being coupled to said shaft for rotation in unison therewith and secured against axial movement along the shaft; and means for engaging said torque transmitting member with said motion effecting member to transmit rotational torque therebetween and to axially secure said motion effecting member to said shaft.

The present invention will now be described by way of example with reference to the accompanying drawings, in which:
Figure 1 is an elevational view of a shaft, a motion effecting member, and the torque transmission member of the present invention;
Figure 2 is an end view of the Figure 1 assembly;
Figure 3 is an end view of a pulley drive system;
Figure 4 is an end view of a hub drive system; and
Figure 5 is an end view of a lever actuator system.

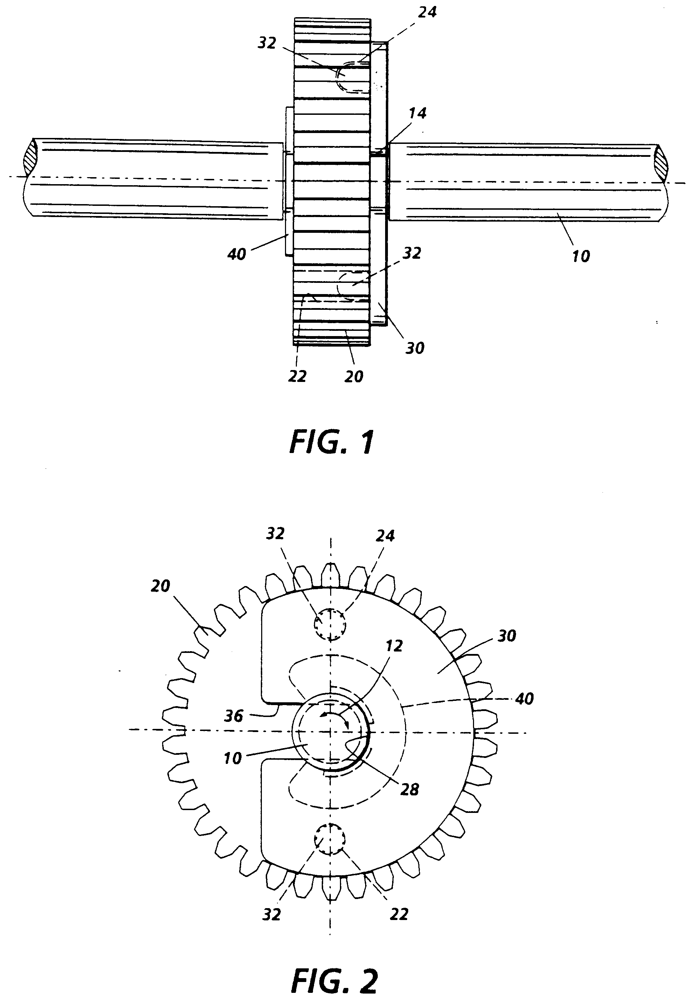

Referring to Figure 1, there is shown an elevational view of a portion of a drive system. The drive system includes a shaft 10 coupled to a motor (not shown). Shaft 10 is rotatable about its axis in either direction as illustrated by arrow 12 (Figure 2). Shaft 10 is round throughout its entire length. A motion effecting member 20 is mounted on shaft 10. The motion effecting member 20, illustrated here as a gear member, but which alternatively may be a pulley, a lever, or any other motion effecting member which rotates in unison with the shaft 10, has a round bore matching the diameter of the shaft 10.

To locate the motion effecting member 20 on the shaft, there is formed into the shaft what is commonly referred to as a double "D" cut 14, which is two radially opposed grooves or slots cut into the shaft. Torque transmitting member 30 has a slot which couples with the double "D" groove on the shaft so that torque transmitting member 30 rotates in unison with the shaft 10. Motion effecting member 20 is then slid over the shaft until it abuts the torque transmitting member 30 to locate in its proper position. Torque transmitting member 30 has a pair of protruding stubs 32 which cooperate with openings formed in the driven member 20. The openings may be merely a depression as illustrated in Figure 1 as reference number 24 or may be a through bore 22 in the motion effecting member 20. Once the motion effecting member is located and the torque transmitting stubs are engaged, a retaining ring 40, typically what is known as an "E" ring, is inserted in a circumferential groove in the shaft 10 to lock the motion effecting member in position.

Turning now to Figure 2, there is shown an end view of the drive system of Figure 1. As is shown thereat, it can be seen that the drive stubs 32 are located a substantially long radial distance from the center of the shaft 10. This relatively long moment arm reduces the localized torque and the resultant force on the drive detent 22 or 24 of the motion effecting member 20. Accordingly, the motion effecting member can be constructed of a relatively lightweight, low strength material, strong enough to function in its intended use, but not necessarily as strong might be required to transmit the high torque load which might otherwise be required utilizing a "D" type shaft and non-round mounting bore. As can be seen, the use of the drive system herein allows mounting anywhere along the shaft with the requirement of the double "D" cut and the retaining ring cut being the only necessity to locate the motion effecting members along the axial length of the shaft. This mounting method also allows the use of like components anywhere along the shaft as the bore which fits onto the shaft is always round.

The motion effecting member illustrated herein is shown as a gear, however it is apparent that any type of drive shaft component, i.e. a pulley, a lever arm, a hub, or any other component which needs to be mounted for rotation in unison with the shaft may be utilized. The mounting stubs 32 are also illustrated as round but obviously any other shape, be it rectangular, square, triangular, or other appropriate shape, may be utilized to interfit with the motion effecting member on the shaft. It is also an option to use stubs that snap fit into the motion effecting member so that a retaining ring is unnecessary. The torque transmitting member 30 is constructed of a metallic or high strength plastic material such that the wear between the groove 36 (Figure 2) in the member 30 and the double D cut in the shaft 10 is minimal. Likewise, the torque transmitting stubs 32 are of the same material as member 30 and provide a positive engagement between the torque transmitting member 30 and the motion effecting member 20.

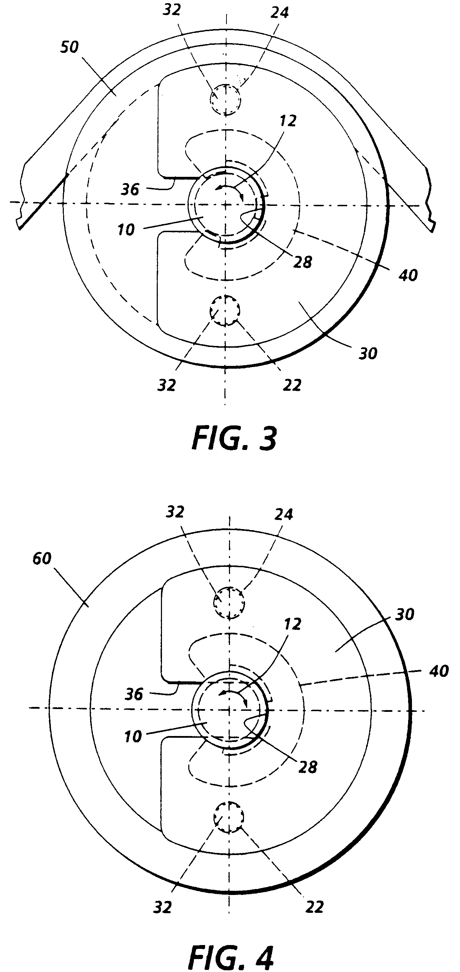

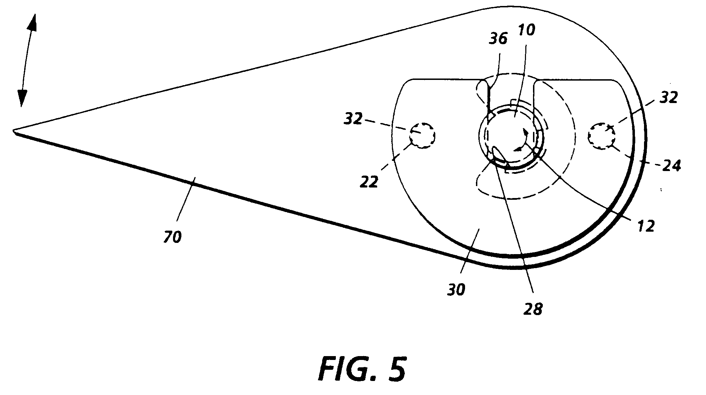

Figures 3, 4 and 5 illustrate different embodiments of the torque transmitting member 30, such as, for example, a pulley 50 (Fig. 3), a hub 60 (Fig. 4), and a lever arm 70 (Fig. 5). Each of the motion effecting members illustrated are mounted in the same manner as described above for the gear member 20 and securely locate and attach the respective motion effecting member to the shaft 10.

It is clear that the drive system of the present invention provides a universally applicable torque transmitting member for locating motion effecting members anywhere along the longitudinal length of a drive shaft. Likewise, the torque transmitting member may be utilized to locate members on any other type shafts, i.e., idler shafts and/or diverter gate shafts for partial rotation or oscillating rotation of less than 360 degrees in many other applications. The torque transmitting member provides a positive coupling between the shaft and the motion effecting member without the need for a non-round bore in the motion effecting member. A simple lock or retaining ring can be utilized to maintain the engagement of stubs 32 of torque transmitting member 30 with the openings or recesses 22,24 in motion effecting member 20.

## Claims

1. A torque transmitting device for a drive system, comprising:
a drive shaft (10);
a motion effecting member (20) slidably mounted on said shaft;
a torque transmitting member (30) being coupled (14,36) to said shaft for rotation in unison therewith and secured against axial movement along the shaft; and
means (22,24,32) for engaging said torque transmitting member with said motion effecting member to transmit rotational torque therebetween and to axially secure said motion effecting member to said shaft.

2. The torque transmitting device as claimed in claim 1, wherein said shaft (10) has a circumferential groove located adjacent said motion effecting member; and wherein the device further comprises a locking ring (40) inserted into the groove to retain said motion effecting member in a selected position, adjacent said torque transmitting member, thereby preventing axial movement of said motion effecting member.

3. The torque transmitting device as claimed in claim 1 or claim 2, wherein:
said shaft (10) defines a pair of radially opposed parallel slots (14) transverse to the axis of said shaft; and
said torque transmitting member (30) contains a slot (36) to interfit with the parallel slots (14) in said shaft.

4. The torque transmitting device as claimed in any of the preceding claims, wherein the means for engaging the torque transmitting member with the motion effecting member comprises fixed stubs (32) protruding from said torque transmitting member which are engaged in openings (22,24) in the motion effecting member, so that relative rotation between said torque transmitting member and said motion effecting member is prevented.

5. The torque transmitting device as claimed in claim 4, wherein said protruding stubs (32) snap fit into engagement with said openings (22,24) in the motion effecting member.
